# EUROPEAN PATENT SPECIFICATION

(11) **EP 2 426 152 B1**
(45) Date of publication and mention of the grant of the patent: **04.06.2014**
(21) Application number: 10769592.6
(22) Date of filing: 02.04.2010
(51) Int. Cl.: C08F 2/44, C08J 9/20, C08K 5/02, C08L 25/04

(54) **FLAME-RETARDANT EXPANDABLE STYRENE RESIN PARTICLES AND METHOD FOR PRODUCING SAME**
FLAMMFESTE EXPANDIERBARE STYROLHARZPARTIKEL UND VERFAHREN ZU IHRER HERSTELLUNG
PARTICULES DE RÉSINE DE STYRÈNE EXPANSIBLES IGNIFUGEANTES ET LEUR PROCÉDÉ DE PRODUCTION

(30) Priority: 28.04.2009 JP 2009109547
(43) Date of publication of application: 07.03.2012
(73) Proprietor: Dai-Ichi Kogyo Seiyaku Co., Ltd., Kyoto 600-8873 (JP)
(72) Inventor: ONISHI Hideaki, kyoto-shi Kyoto 600-8873 (JP); SEMORI Hisanori, kyoto-shi Kyoto 600-8873 (JP); ASAOKA Masashi, kyoto-shi Kyoto 600-8873 (JP)
(74) Representative: Reitstötter - Kinzebach
(86) International application number: PCT/JP2010/056053
(87) International publication number: WO 2010/125893

(56) References cited:
- JP-A- 2005 145 988
- JP-A- 2005 272 646
- JP-A- 2007 009 018
- JP-A- 2008 239 709

## Description

### TECHNICAL FIELD

The invention relates to foamable styrene-based resin beads having an enhanced flame retardancy and a low volatile content originating from residual resin monomer. The invention also relates to a process for producing such resin beads.

### BACKGROUND ART

Foamable polystyrene beads containing blowing agent are advantageous in that they are easily shapable in a mold by heating and allowing to expand. The shaped foams thus produced have many advantageous properties including low density, high bulkiness, lightweight, high mechanical strength and high thermal insulation property. Therefore, shaped polystyrene foams are used in a variety of fields as insulation materials for household electrical appliance, automotive cars, buildings and houses and as materials for earth piling in the civil engineering technology. However, polystyrene foam is very inflammable and requires to comply with a flame retardancy standard prescribed in a particular application field. UL-94 standard for electrical components, MVSS-302 for interior wall of automotive cars, JIS A 9511 for thermal insulation materials, and oxygen index (LOI) for storage and transport of polystyrene foam under the fire control regulations are examples of such standards.

Two processes are known for producing flame-retarded polystyrene beads, namely a first process comprising impregnating pre-formed polystyrene beads with a flame retardant and a second process comprising suspension-polymerizing styrene monomer containing a flame retardant. The second process is advantageous in that the production of polystyrene beads and imparting the beads with flame retardancy may be accomplished simultaneously. JP 38/16837B discloses the second process comprising suspension-polymerizing styrene monomer containing an bromine-containing aliphatic cyclic compound such as dibromoethyldibromocyclohexane, hexabromo-cyclododecane (HBCD) or tetrabromocyclooctane (TBCO) and optionally an auxiliary flame retardant.

Recently, foamable polystyrene beads having increased flame retardancy are demanded from safety-outweighed point of view. As a flame retardant to be used for impregnation in the second process, JP 59059731A and JP 63215740A disclose a bromine-containing allyl compound in conjunction with dibromoethyl-dibromocyclohexane or HBCD, in order to achieve high flame retardancy levels. However, a problem arises when adding these flame retardants having allyl group to styrene monomer. Owing to the possession of allyl group, these flame retardants, show a high chain transfer effect and, therefore, interfere with the polymerization of styrene monomer so that the contents of low molecular weight polystyrene and residual styrene monomer are increased in the resulting polymerization product. The residual styrene is considered as a cause of hypersensitivity to chemicals known as sick house syndrome, and reduction of residual styrene monomer is highly demanded for polystyrene foam heat insulation materials used in living constructions.

In order to eliminate the problem of decrease in molecular weight and increase in residual styrene monomer, JP 2005008670A proposes to use two polymerization initiators having different half-life temperature, namely, low temperature type initiator and high temperature type initiator when a bromine-containing allyl flame retardant is incorporated into styrene monomer. JP 2007009018A proposes to use a flame retardant having 2,3-dibromo-2-alkylpropyl group to be incorporated into styrene monomer for suspension polymerization. However, the flame retardant having 2,3-dibromo-2-alkylpropyl group has a bromine atom attached to tertiary carbon atom and interferes with polymerization like the flame retardant having allyl group. Consequently, it is necessary to use two polymerization initiators having different half-life temperatures namely low temperature type initiator and high temperature type initiator when the flame retardant having 2,3-dibromo-2-alkylpropyl group is used. In order to decrease residual styrene monomer, the above two methods require to carry out the polymerization reaction process in two steps using two different initiators. A strong need exists for carrying out the polymerization reaction of styrene monomer in simple manner.

Flame retardants free of allyl or 2,3-dibromo-2-alkylpropyl group such as tetrabromobisphenol A bis(2,3-dibromopropyl)ether, tris(dibromopropyl)isocyanurate, tris(tribromoneopentyl) phosphate, and other bromine-containing compounds having brominated aliphatic groups are known to have little adverse effect on the polymerization reaction. Because the flame retardant effect of these flame retardants having a brominated aliphatic group is relatively low, they need to add in a large amount to achieve a satisfactory flame retardancy level. This arises a problem of compromising heat resistance (thermal deformation temperature), mechanical and physical properties of the resulting shaped foam. Flame retardants in which all bromine atoms are attached to an aromatic ring also known but their flame retardant effect is lower than the flame retardants having brominated aliphatic groups.

### BRIEF SUMMARY OF THE INVENTION

### PROBLEM TO BE SOLVED BY THE INVNETION

The present invention is made for the purpose of solving the above problems. Accordingly, a principal object of the present invention is to provide flame-retarded foamable styrene-based resin beads having a high flame retardancy level achievable with a small amount of addition of a bromine containing flame retardant and having decreased residual monomer content. It is another object of the present invention to provide a process for producing said styrene-based resin beads.

### MEANS FOR SOLVING THE PROBLEM

According to an aspect of the present invention, there is provided flame-retarded foamable styrene-based resin beads produced by a suspension polymerization process comprising polymerizing a styrene type monomer composition containing 0.5 to 5.0 parts by weight per 100 parts by weight of said monomer of a bromine-containing flame retardand, said styrene-based resin beads comprising a blowing agent incorporated by impregnation with the blowing agent during or after the suspension polymerization, wherein said bromine-containing flame retardant comprises a mixture of (a) an organic bromine-containing compound having 2,3-dibromo-2-alkylpropyl group and (b) an organic bromine-containing compound having bromine content greater than 50 wt% and free of any bromine atom attached to a tertiary carbon atom and;
selected from the group consisting of bis(2,3.dibromopropyl)ethers of tetrabromobisphenol A, tetrabromobisphenol S or tetrabromobisphenol F, tris(2,3-dibromopropyl)isocyanurate, tris(2,3-dibromopropyl)cyanurate, tris(tribromoneopentyl)phosphate, tetrabromobisphenol A, hexabromobenzene, pentabromotoluene, 1,2-bis(tribromophenoxy)ethane, polybromodiphenyl-ether, polybromodiphenylethane, tris(polybromophenoxy)triazine, polybromophenylindane, tetrabromobisphenol A epoxy oligomer and terminal adduct thereof with tribromophenol, tetrabromobisphenol A carbonate oligomer, polybrominated polyethylene, poly(polybromostyrene), brominated polyphenylene oxide, poly(pentabromo-benzyl acrylate)and ethylene bis-tetrabromophthalimide.

According to another aspect of the present invention, there is provided a process for producing flame-retarded foamable styrene-based resin beads comprising the steps of suspension polymerizing a styrene type monomer containing 0.5 to 5.0 parts by weight of a bromine-containing flame retardant per 100 parts by weight of said monomer, and impregnating the resulting polymer beads with a blowing agent during or after polymerization to incorporate the blowing agent into said polymer beads, wherein said bromine-containing flame retardant comprises a 90:10 to 10:90 mixture on weight basis of an organic bromine-containing compound having 2,3-dibromo-2-alkylpropyl group and an organic bromine-containing compound having a bromine content greater than 50 wt% and free of any bromine atom attached to a tertiary carbon atom,
selected from the group consisting of bis(2,3.dibromopropyl)ethers of tetrabromobisphenol A, tetrabromobisphenol S or tetrabromobisphenol F, tris(2,3-dibromopropyl)isocyanurate, tris(2,3-dibromopropyl)cyanurate, tris(tribromoneopentyl)phosphate, tetrabromobisphenol A, hexabromobenzene, pentabromotoluene, 1,2-bis(tribromophenoxy)ethane, polybromodiphenyl-ether, polybromodiphenylethane, tris(polybromophenoxy)triazine, polybromophenylindane, tetrabromobisphenol A epoxy oligomer and terminal adduct thereof with tribromophenol, tetrabromobisphenol A carbonate oligomer, polybrominated polyethylene, poly(polybromostyrene), brominated polyphenylene oxide, poly(pentabromo-benzyl acrylate)and ethylene bis-tetrabromophthalimide.

### EFFECT OF THE INVENTION

According to the present invention, flame-retarded foamable styrene-based resin beads having a high flame retardancy level with the addition of a flame retardant in a small amount and having decreased amount of residual monomer is provided by the combined use of (a) a bromine-containing compound having 2,3-dibromo-2-alkylpropyl group and (b) an organic bromine-containing compound having a bromine content greater than 50 wt% and free of any bromine atom attached to a tertiary carbon atom and, selected from the group consisting of bis(2,3.dibromopropyl)ethers of tetrabromobisphenol A, tetrabromobisphenol S or tetrabromobisphenol F, tris(2,3-dibromopropyl)isocyanurate, tris(2,3-dibromopropyl)cyanurate, tris(tribromoneopentyl)phosphate, tetrabromobisphenol A, hexabromobenzene, pentabromotoluene, 1,2-bis(tribromophenoxy)ethane, polybromodiphenyl-ether, polybromodiphenylethane, tris(polybromophenoxy)triazine, polybromophenylindane, tetrabromobisphenol A epoxy oligomer and terminal adduct thereof with tribromophenol, tetrabromobisphenol A carbonate oligomer, polybrominated polyethylene, poly(polybromostyrene), brominated polyphenylene oxide, poly(pentabromo-benzyl acrylate)and ethylene bis-tetrabromophthalimide.

### BEST MODE FOR CARRYING OUT THE INVENTION

Now the present invention will be described in detail. The foamable styrene-based resin beads according to the present invention may be produced by the known process comprising the steps of suspension-polymerizing a mixture of styrene type monomer, a flame retardant, a polymerization initiator and optional additives, and impregnating the resulting polymer beads with a blowing agent during or after polymerization.

The term "styrene type monomer" as used herein refers to an aromatic vinyl monomer such as styrene, o-methylstyrene, m-methylstyrene, p-methylstyrene, 2,4-dimethylstyrene, ethylstyrene, p-tert-butylstyrene, α-methylstyrene, α-methyl-p-methyl-styrene, 1, 1-diphenylethylene, p-(N,N-diethylaminoethyl)styrene, p-(N,N-diethylaminomethyl)styrene, vinylpyridine or vinylnaphthalene. Mixtures of two or more aromatic vinyl monomers may be used.

The styrene type monomer may be combined other vinyl monomers including, for example, acrylate esters, methacrylate esters, acrylonitrile, maleate, vinyl acetate or olefin monomers. Bifunctional monomers such as divinyl benzene, alkyleneglycol di(meth)acrylate esters may also be combined to achieve cross-linking structure.

The monomer mixture should preferably comprise more than 50 wt% of styrene.

The bromine-containing flame retardant is a combination of (a) an organic bromine-containing compound having 2,3-dibromo-2-alkylpropyl group and (b) an organic bromine-containing compound having a bromine content greater than 50 wt% and free of any tertiary bromine atom.

The term "tertiary bromine atom" as used herein refers to a bromine atom attached to a tertiary carbon atom. Similarly "primary bromine atom", "secondary bromine atom" and "aromatic bromine atom" refer to, respectively, a bromine atom attached to a primary carbon atom, a bromine atom attached to a secondary carbon atom, and a bromine atom attached to an aromatic carbon atom.

For example, the bromine atom at position 2 of 2,3-dibromo-2-methylpropyl group is a tertiary bromine atom while the bromine atom at position 2 of 2,3-dibromopropyl group is a secondary bromine atom.

Examples of (a) organic bromine-containing compounds having 2,3-dibromo-2-alkylpropyl group include, for example, bisphenol A bis(2,3-dibromo-2-methylpropyl)ether, bisphenol S bis(2,3-dibromo-2-methylpropyl)ether, bisphenol F bis(2,3-dibromo-2-methylpropyl)ether, polybromobisphenol A bis(2,3-dibromo-2-methylpropyl)ether, polybromobisphenol S bis(2,3-dibromo-2-methylpropyl) ether, polybromobisphenol F bis(2,3-dibromo-2-methyl-propyl)ether, tris(2,3-dibromo-2-methylpropyl)isocyanurate, and tris(2,3-dibromo-2-methylpropyl)cyanurate.

Among them, bisphenol 2,3-dibromo-2-methylpropyl ethers and brominated bisphenol 2,3-dibromo-2-methylpropyl ethers are preferable. Brominated bisphenol A bis(2,3-dibromo-2-methylpropyl)ether, brominated bisphenol S bis(2,3-dibromo-2-methylpropyl)ether, and brominated bisphenol F bis(2,3-dibromo-2-methyl-propyl)ether are particularly preferable.

In order to decrease the amount of residual styrene type monomers from the beads, it is preferable that the total amount of precursor compounds having allyl or methallyl group is less than 1 mol% after the addition of bromine to the precursor compound.

Organic bromine compounds (b) having a bromine content greater than 50 wt% and free of any tertiary bromine atom are selected from the group consisting of bis(2,3.dibromopropyl)ethers of tetrabromobisphenol A, tetrabromobisphenol S or tetrabromobisphenol F, tris(2,3-dibromopropyl)isocyanurate, tris(2,3-dibromopropyl)cyanurate, tris(tribromoneopentyl)phosphate, tetrabromobisphenol A, hexabromobenzene, pentabromotoluene, 1,2-bis(tribromophenoxy)ethane, polybromodiphenyl-ether, polybromodiphenylethane, tris(polybromophenoxy)triazine, polybromophenylindane, tetrabromobisphenol A epoxy oligomer and terminal adduct thereof with tribromophenol, tetrabromobisphenol A carbonate oligomer, polybrominated polyethylene, poly(polybromostyrene), brominated polyphenylene oxide, poly(pentabromo-benzyl acrylate)and ethylene bis-tetrabromophthalimide. Two or more compounds having may be used in combination.

In order to decrease the amount of residual styrene-type monomer from the beads, the amount of precursor component in the compound having 2,3-dibromopropyl group is preferably less than 1 mol %.

In order to achieve satisfactory cell structure in the shaped foam articles, the organic bromine compounds free of any tertiary bromine atom are preferably soluble in a styrene type monomer in an amount greater than 1 wt%. Examples of organic bromine compound soluble in styrene type monomer include, tetrabromobisphenol A bis(2,3-dibromopropyl)ether, tetrabromobisphenol S bis(2,3-dibromopropyl)ether, tetrabromobisphenol F bis(2,3-dibromopropyl)ether, tris(2,3-dibromopropyl)iso-cyanurate, tris(2,3-dibromopropyl)cyanurate, tris(tribromoneopentyl)phosphate, 1,2-bis(tribromophenoxy)ethane, tetrabromobisphenol A, polybromodiphenyl ether, tris(polybromophenoxy)triazine, p-olybromophenyl-indane, tetrabromobisphenol A epoxy oligomer, tetrabromobisphenol A epoxy oligomer tribromophenol terminal adduct, poly(polybromostyrene), and polybrominated polyphenylene oxide.

The ratio of organic bromine compound having 2,3-dibromo-2-alkylpropyl group to the organic bromine compound having a bromine content greater than 50 wt% and free of any tertiary bromine atom ranges preferably 90:10 to 10:90, more preferably 80:20 to 20:80.

Any of known peroxide polymerization initiators may be used in the present invention. Examples of the peroxide polymerization initiators include benzoyl peroxide, stearoyl peroxide, t-butylperoxy 2-ethylhexanoate, t-butylperoxy isobutyrate, t-hexylperoxy 2-ethylhexanoate, t-amylperoxy 2-ethylhexanoate, 1-cyclohexyl-1-methylethylperoxy 2-ethylhexanoate, 1,1,3,3-tetra-methylbutylperoxy 2-ethylhexanoate, 2,5-dimethyl-2,5-bis(2-ethylhexanoylperoxy)hexane, t-butylperoxy isopropyl carbonate, t-butylperoxy 2-ethylhexyl carbonate, t-butylperoxy benzoate, t-amylperoxy isopropyl carbonate, t-amylperoxy 2-ethylhexyl carbonate, t-hexylperoxy isopropyl carbonate, t-butylperoxy 3,5,5-trimethylhexanoate, 1,1-bis(t-butylperoxy)-3,3,5-trimethylcyclohexane, 1,1-bis(t-butylperoxy)-2-methylcyclohexane, 1,1-bis(t-butylperoxy)-cyclohexane, 1,1-bis(t-butylperoxy)cyclododecane, 2,2-bis(t-butylperoxy)butane, 1,1-bis(t-hexylperoxy)-3,3,5-trimethylcyclohexane, 1,1-bis(t-hexylperoxy)cyclohexane, and 2,2-bis(4,4-di-t-butylperoxy)cyclohexylpropane. Peroxide polymerization initiators having a 10 hour half life temperature between 60°C and 100°C are preferable.

According to the present invention, foamable styrene-based resin beads are produced by incorporating a blowing agent into beads during or after the polymerization. Examples of usable blowing agents are aliphatic hydrocarbons having a boiling point lower than 100°C such as propane, butane, isobutane, pentane, hexane, petroleum ether, cyclopentane or cyclohexane. Ethers such as dimethyl ether or diethyl ether, and chloro- or fluoroalkanes such as chloromethane may also be employed.

It is known that the flame retardant effect of bromine-containing flame retardants is enhanced by a free radical generator or a phthalocyanine complex. These enhancers may be used in the present invention and include, for example, cumene peroxide, cumene hydroperoxide, di-t-butyl peroxide, di-t-hexyl peroxide, 2,5-dimethyl-2, 5-di(t-butylperoxy)hexine-3, dicumyl peroxide, 2,3-dimethyl-2, 3-diphenylbutane, and phthalocyanine iron complex. Excessive addition of the enhancer may compromise the heat stability of foam upon recycling. Therefore, the enhancer may optionally be added at less than 1 wt%, preferably at 0.01 to 0.5 wt%.

A dispersing agent may be used in the suspension polymerization process according to the present invention. Any known dispersing agent may be employed. Examples thereof include water-soluble polymer dispersants such as polyvinyl alcohol, polyvinyl pyrrolidone and polyacrylamide, and water-insoluble inorganic dispersants such as tertiary calcium phosphate, talc, kaolin, bentonite, hydroxyapatite and magnesium pyrophosphate. If desired, the dispersing agent may be combined with an anionic surfactant such as sodium alkylbenzene-sulfonate, sodium branched alkylbenzene-sulfonate, sodium α-olefin sulfonate and sodium laurylsulfate.

### EXAMPLES

The following examples and comparative examples are given without limiting the invention thereto. In the Examples and Comparative Examples, following materials are used.

### Organic bromine-containing compounds

B-1: Organic bromine-containing compound having 2,3-dibromo-2-alkylpropyl group
B-1-1: TBBA^{[1]} bis(2,3-dibromo-2-methylpropyl)-ether, PYROGUARD SR-130, Dai-Ichi Kogyo Seiyaku Co., Ltd.
   [1] TBBA = tetrabromobisphenol A
B-2 : Organic bromine-containing compound having bromine content greater than 50 wt% and free of any tertiary bromine atom
B-2-1: Hexabromocyclododecane, PYROGUARD SR-103, Dai-Ichi Kogyo Seiyaku Co., Ltd.
B-2-2: TBBA bis(2,3-dibromopropyl)ether, PYROGUARD SR-720, Dai-Ichi Kogyo Seiyaku Co., Ltd.
B-2-3: Tris(2,3-dibromopropyl)isocyanurate, TAIC-6B, Nippon Kasei Chemical Co., Ltd.
B-2-4: Tris(tribromoneopentyl)phosphate, CR-900, Daihachi Chemical Industry Co., Ltd.
B-2-5: 1,2-bis(2,4,6-tribromophenoxy)ethane, FF-680, Chemtura Corp.
B-2-6: 2,4,6-tris(2,4,6-tribromophenoxy)-1,3,5-triazine, PYROGUARD SR-245, Dai-Ichi Kogyo Seiyaku Co., Ltd.
B-2-7: Decabromodiphenylethane, SAYTEX 8010, Albemarle Corp., average particle size 2 µm.
B-2-8: Brominated poly(phenyleneoxide), PYROGUARD SR-460B, Dai-Ichi Kokyo Seiyaku Co., Ltd.

The characteristics of the above bromine compounds are given in Table 1 below.

### Flame retardancy enhancer

DCPO, Dicumyl peroxide, PERCUMYL D, NOF Corp.

### Polymerization initiator

Benzoyl peroxide, NAIPER BW, 75% water content, 10 hour half life temperature 73.6°C, NOF Corp.

### Dispersant

Sodium laurylbenzenesulfonate, NEOGEN S-20, 20% solution in water, Dai-Ichi Kogyo Seiyaku Co., Ltd. plus Ca₃(PO₄)₂.

### Preparation of foamable styrene-based resin beads and shaping the foam

A 5 liter autoclave equipped with a stirrer was charged with 2,000g of deionized water, 4g of Ca₃(PO₄)₂, and 2.5g of 20% solution of sodium laurylbenzene-sulfonate. Separately, 8g of NAIPER BW was dissolved in 2,000g of styrene. Organic bromine compounds and other additives were also dissolved or dispersed in styrene monomer according to the formulations shown in Tables 2 and 3. Then, 2,000g of styrene monomer containing polymerization initiator and various additives was added to the autoclave with stirring and suspension polymerization was continued at 100°C for 8 hours. Into the autoclave was introduced 180g of blowing agent (7:3 mixture of n-butane and isobutane) under pressure and the mixture was maintained at 115°C for 8 hours to impregnate the polymer particles with the blowing agent. The polymer particles thus treated were recovered from the slurry and then air-dried to obtain foamable polystyrene beads.

Separately, an aliquot of polymer particle slurry (about 1g) was taken from the autoclave before introducing the blowing agent and filtered. After air-drying at 40°C, the collected polymer particles were used as an analytical sample.

The foamable polystyrene beads produced by the above process were pre-expanded by heating with steam at 100°C, placed in a mold (300 x 300 x 50 mm) and heated at 115°C with superheated steam for final foaming and shaping.

### Measurement of molecular weight

The weight average molecular weight (Mw) of the polystyrene particles was determined by the GPC method using the sample taken as above. For dissolving the polymer in a solvent, care was taken to avoid vigorous stirring. An apparatus named HPLC-8020 available from Tosoh Corp. was used. Separation columns of TSK gel G6000H HR, G4000H HR, G3000H HR and G2000H HR, all available from Tosoh Corp. were series connected and kept at a constant temperature of 40°C. As a mobile phase, THF was flown at a flow rate of 0.8 mL/min. The sample was dissolved in 0.2 wt% in THF and 80µL of the solution was injected. A differential refractometer was used for detection. The Mw was determined based on standard polystyrene.

### Residual styrene monomer content

A sample of polystyrene particles before impregnation with blowing agent was dissolved in DMF to a concentration of 0.1 % and the content of residual styrene monomer was determined by the gas chromatography.

As a column, PEG20MPT 25% Uniport B 60/80 SUS 2m x 3mm ID was used. The measurement was carried out at a column temperature of 100°C and at a flow rate of the carrier nitrogen gas of 36 mL/min. Acetonitrile was used as an internal standard.

### Evaluation of combustibility

The shaped foam article was cut into test specimens of 10mm thickness x 200mm length x 25mm width size and tested for combustibility according to the method of JIS A 9511 whether the specimen passes this test.

The formulations and test results of Examples and Comparative Examples are shown in Table 2 and Table 3. As is apparent from Table 2, the foamable polystyrene beads obtained in the present invention have sufficiently high molecular weight and low residual styrene content although a single polymerization initiator is used. As is also apparent from Table 2, a desired flame retardancy level is achieved with a small amount of a bromine compound (b) when used in combination with a bromine compound (a) having 2,3-dibromo-2-methylpropyl group. The bromine compound (b) normally requires a large amount to achieve a satisfactory flame retardancy level.

As is apparent from Comparative Example 1 of Table 3, the addition of a bromine compound (a) having 2,3-dibromo-2-methylpropyl group alone is effective to achieve a high flame retardancy level but results in the polymer beads having a lower molecular weight and a larger residual styrene content than the polymer beads of Examples.

As is apparent from Comparative Example 2, the addition of a bromine-containing flame retardant having high flame retardant efficacy such as HBCD alone is effective to achieve a high flame retardancy level but fails to obtain polymer beads having a high molecular weight and a low residual styrene content compared with the beads obtained in Examples.

As is apparent from Comparative Examples 3 and 4, the addition of a bromine compound (b) having low flame retardant efficacy alone is effective to obtain polymer beads having a high molecular weight and a low residual styrene content but fails to impart with high flame retardancey level.

**Table 1**

| Characteristics of Bromine Compounds Used in Examples and Comparative Examples | | | | | | |
|---|---|---|---|---|---|---|
| Notation | Compound Name | % Br | Nature and Number of Br | | | |
| | | | Tert | Sec. | Prim. | Aromatic |
| B-1-1 | TBBA-bis(2,3-dibromo-2-methylpropyl)ether | 65 | 2 | 0 | 2 | 4 |
| B-2-1 | Hexabromocyclododecane | 74 | 0 | 6 | 0 | 0 |
| B-2-2 | TBBA-bis(2,3-dibromopropyl)ether | 68 | 0 | 2 | 2 | 4 |
| B-2-3 | Tris(2,3-dibromopropyl)isocyanurate | 68 | 0 | 3 | 3 | 0 |
| B-2-4 | Tris(tribromoneopentyl)phosphate | 70 | 0 | 0 | 9 | 0 |
| B-2-5 | 1,2-Bis(2,4,6-tribromophenoxy)ethane | 70 | 0 | 0 | 0 | 6 |
| B-2-6 | 2,4,6-Tris(2,4,6-tribromophenoxy)-1,3,5-triazine | 68 | 0 | 0 | 0 | 9 |
| B-2-7 | Decabromodiphenylethane | 82 | 0 | 0 | 0 | 10 |
| B-2-8 | Brominated polyphenylene oxide | 64 | 0 | 0 | 0 | 2* |

| | | | | | | |
|---|---|---|---|---|---|---|
| * per recurring unit | | | | | | |

**Table 2 Examples**

| Bromine Compound | Example | | | | | | | | | |
|---|---|---|---|---|---|---|---|---|---|---|
| | 1* | 2 | 3 | 4 | 5 | 6 | 7 | 8 | 9 | 10 |
| B-1-1 | 0.2 | 0.6 | 0.8 | 0.4 | 0.4 | 0.3 | 0.2 | 0.3 | 0.4 | 0.4 |
| B-2-1 | 0.6 | | | | | | | | | |
| B-2-2 | | 0.6 | | | | | 0.4 | | | |
| B-2-3 | | | | 0.8 | | | | | | |
| B-2-4 | | | 0.4 | | | | | | | |
| B-2-5 | | | | | 0.8 | | | | | |
| B-2-6 | | | | | | 1.0 | | 0.3 | | |
| B-2-7 | | | | | | | | | 0.2 | |
| B-2-8 | | | | | | | | | | 0.2 |
| DCPO | | | | | | | 0.3 | 0.3 | 0.3 | 0.3 |
| Combustibility | Pass | Pass | Pass | Pass | Pass | Pass | Pass | Pass | Pass | Pass |
| Mw (x 10³) | 270 | 268 | 270 | 272 | 270 | 272 | 274 | 272 | 270 | 268 |
| Residual SM(ppm) | 540 | 580 | 500 | 450 | 470 | 340 | 350 | 410 | 380 | 460 |

| | | | | | | | | | | |
|---|---|---|---|---|---|---|---|---|---|---|
| The amount of bromine compounds and DCPO is represented in ppw per 100 ppw of SM (styrene monomer). * Reference example | | | | | | | | | | |

**Table 3 Comparative Examples**

| Bromine Compound | Comparative Example | | | |
|---|---|---|---|---|
| | 1 | 2 | 3 | 4 |
| B-1-1 | 1.2 | | | |
| B-2-1 | | 1.2 | | |
| B-2-2 | | | 2.0 | |
| B-2-5 | | | | 3.0 |
| DCPO | | | 0.3 | 0.3 |
| Combustibility | Pass | Pass | No | No |
| Mw (x 10³) | 254 | 260 | 272 | 270 |
| Residual SM (ppm) | 1400 | 1300 | 800 | 620 |

| | | | | |
|---|---|---|---|---|
| The amount of bromine compound in DCPO is represented in ppw per 100 ppw of SM (styrene monomer). | | | | |

## Claims

1. Flame-retarded foamable styrene-based resin beads produced by a suspension polymerization process comprising polymerizing a styrene-type monomer composition containing 0.5 to 5.0 parts by weight per 100 parts by weight of said monomer of a bromine-containing flame retardant, said styrene-based resin beads comprising a blowing agent incorporated by impregnation with the blowing agent during or after the suspension polymerization, wherein said bromine-containing flame retardant comprises a mixture of (a) an organic bromine-containing compound having 2,3-dibromo-2-alkylpropyl group and (b) an organic bromine-containing compound having a bromine content greater than 50 wt% and free of any bromine atom attached to a tertiary carbon atom; the organic bromine-containing compound (b) being selected from the group consisting of bis(2,3-dibromopropyl)ethers of tetrabromobisphenol A, tetrabromobisphenol S or tetrabromobisphenol F, tris(2,3-dibromopropyl)isocyanurate, tris(2,3-dibromopropyl)cyanurate, tris(tribromoneopentyl)-phosphate, tetrabromobisphenol A, hexabromobenzene, pentabromotoluene, 1,2-bis(tribromophenoxy)ethane, polybromodiphenyl-ether, polybromodiphenylethane, tris(polybromophenoxy)triazine, polybromophenylindane, tetrabromobisphenol A epoxy oligomer and terminal adduct thereof with tribromophenol, tetrabromobisphenol A carbonate oligomer, polybrominated polyethylene, poly(polybromostyrene), brominated polyphenylene oxide, poly(pentabromo-benzyl acrylate) and ethylene bis-tetrabromophthalimide.

2. The flame-retarded foamable styrene-based resin beads according to claim 1 wherein said bromine-containing organic compound (a) having 2,3-dibromo-2-alkylpropyl group is selected from the group consisting of bis(2,3-dibromo-2-methylpropyl)ethers of tetrabromobisphenol A, tetrabromobisphenol S or tetrabromobisphenol F, tris(2,3-dibromo-2-methylpropyl)-isocyanurate, and tris(2,3-dibromo-2-methylpropyl)-cyanurate.

3. The flame-retarded foamable styrene-based resin beads according to one of claims 1-2 wherein the ratio of said bromine-containing compound (a) having 2,3-dibromo-2-alkylpropyl group to said bromine-containing compound (b) free of any bromine atom attached to a tertiary carbon atom is from 10:90 to 90:10 on weight basis.

4. The flame-retarded foamable styrene-based resin beads according to one of claims 1-3 further comprising less than 1.0 parts by weight per 100 parts by weigh of said monomer of a flame retardancy enhancer selected from the group consisting of a phthalocyanine metal complex and a free radical generator.

5. A shaped article produced by heating the flame-retarded foamable styrene-based resin beads according to one of claims 1-4 in a mold for expanding to shaped foam.

6. A process for producing foamable styrene-based resin beads comprising the steps of:
suspension polymerizing a monomer composition comprising a styrene type monomer and 0.5 to 5.0 parts by weight per 100 parts by weight of said monomer of a bromine-containing flame retardant, and impregnating the resulting resin particles with a blowing agent during or after the polymerization process wherein said bromine-containing flame retardant is a mixture of (a) an organic bromine-containing compound having 2,3-dibromo-2-alkylpropyl group and (b) an organic bromine-containing compound selected from the group consisting of bis(2,3-dibromopropyl)ethers of tetrabromobisphenol A, tetrabromobisphenol S or tetrabromobisphenol F, tris(2,3-dibromopropyl)asocyanurate, tris(2,3-dibromopropyl)cyanurate, tris(tribromoneopentyl) phosphate, tetrabromobisphenol A, hexabromobenzene, pentabromotoluene, 1,2-bis(tribromophenoxy)ethane, polybromodiphenyl-ether, polybromodiphenylethane, tris(polybromophenoxy)triazine, polybromophenylindane, tetrabromobisphenol A epoxy oligomer and terminal adduct thereof with tribromophenol, tetrabromobisphenol A carbonate oligomer, polybrominated polyethylene, poly(polybromostyrene), brominated polyphenylene oxide, poly(pentabromo-benzyl acrylate) and ethylene bis-tetrabromophthalimide, wherein the ratio of (a):(b) is from 10:90 to 90:10 on weight basis.

7. The process for producing flame-retarded foamable styrene-based resin beads according to claim 6 wherein said bromine containing organic compound (a) having 2,3-dibromo-2-alkylpropyl group is selected from the group consisting of bis(2,3-dibromo-2-methylpropyl)ethers of tetrabromobisphenol A, tetrabromobisphenol S or tetrabromobisphenol F, tris(2,3-dibromo-2-methylpropyl)-isocyanurate, and tris(2,3-dibromo-2-methylpropyl)-cyanurate.

## Patentansprüche

1. Flammfeste schäumbare Styrolharzkügelchen, hergestellt durch ein Suspensionspolymerisationsverfahren, umfassend das Polymerisieren einer Monomerzusammensetzung vom Styroltyp, welche 0,5 bis 5,0 Gewichtsanteile eines bromhaltigen Flammschutzmittels pro 100 Gewichtsteile Monomer enthält, wobei die Styrolharzkügelchen ein Treibmittel umfassen, welches durch Imprägnieren mit dem Treibmittel während oder nach der Suspensionspolymerisation eingebracht wird, wobei das bromhaltige Flammschutzmittel ein Gemisch von (a) einer organischen bromhaltigen Verbindung mit einer 2,3-Dibrom-2-alkylpropylgruppe und (b) einer organischen bromhaltigen Verbindung mit einem Bromgehalt größer als 50 Gew.-% und frei von Bromatomen, die an ein tertiäres Kohlenstoffatom gebunden sind, ist; wobei die organische bromhaltige Verbindung (b) unter Bis(2,3-dibrompropyl)ethern von Tetrabrombisphenol A, Tetrabrombisphenol S oder Tetrabrombisphenol F, Tris(2,3-dibrompropyl)isocyanurat, Tris(2,3-dibrompropyl)cyanurat, Tris(tribromneopentyl)-phosphat, Tetrabrombisphenol A, Hexabrombenzol, Pentabromtoluol, 1,2-Bis(tribromphenoxy)ethan, Polybromdiphenylether, Polybromdiphenylethan, Tris(polybromphenoxy)triazin, Polybromphenylindan, Tetrabrombisphenol-A-Epoxyoligomer und einem terminalem Addukt davon mit Tribromphenol, Tetrabrombisphenol A-carbonatoligomer, polybromiertem Polyethylen, Poly(polybromstyrol), bromiertem Polyphenylenoxid, Poly(pentabrombenzylacrylat) und Ethylenbistetrabromphthalimid ausgewählt ist.

2. Flammfeste schäumbare Styrolharzkügelchen nach Anspruch 1, wobei die bromhaltige organische Verbindung (a) mit 2,3-Dibrom-2-alkylpropylgruppen unter Bis(2,3-dibrom-2-methylpropyl)ethern von Tetrabrombisphenol A, Tetrabrombisphenol S oder Tetrabrombisphenol F, Tris(2,3-dibrom-2-methylpropyl)isocyanurat und Tris(2,3-dibrom-2-methylpropyl)cyanurat ausgewählt ist.

3. Flammfeste schäumbare Styrolharzkügelchen nach einem der Ansprüche 1 - 2, wobei das Verhältnis von bromhaltiger Verbindung (a) mit 2,3-Dibrom-2-alkylpropylgruppen zur bromhaltigen Verbindung (b), welche von Bromatomen frei ist, die an ein tertiäres Kohlenstoffatom gebunden sind, im Bereich von 10:90 bis 90:10 auf Gewichtsbasis liegt.

4. Flammfeste schäumbare Styrolharzkügelchen nach einem der Ansprüche 1 - 3, weiterhin umfassend weniger als 1,0 Gewichtsteile pro 100 Gewichtsteile Monomer eines Flammschutz-Enhancers, ausgewählt unter einem Phthalocyanin-Metallkomplex und einem Generator freier Radikale.

5. Formteil, hergestellt durch Erhitzen der feuerfesten schäumbaren Styrolharzkügelchen nach einem der Ansprüche 1 - 4 in einer Form zur Expansion zu Formschaum.

6. Verfahren zur Herstellung feuerfester schäumbarer Styrolharzkügelchen, umfassend die folgenden Schritte:
Suspensionspolymerisation einer Monomerzusammensetzung, umfassend ein Monomer vom Styroltyp und 0,5 bis 5,0 Gewichtsteile eines bromhaltigen Flammschutzmittels pro 100 Gewichtsteilen Monomer, und Imprägnieren der erhaltenen Harzkügelchen mit einem Treibmittel während oder nach dem Polymerisationsprozess, wobei das bromhaltige Flammschutzmittel ein Gemisch von (a) einer organischen bromhaltigen Verbindung mit 2,3-Dibrom-2-alkylpropylgruppen und (b) einer organischen bromhaltigen Verbindung ist, die unter Bis(2,3-dibrompropyl)ethern von Tetrabrombisphenol A, Tetrabrombisphenol S oder Tetrabrombisphenol F, Tris(2,3-dibrompropyl)isocyanurat, Tris(2,3-dibrompropyl)cyanurat, Tris(tribromneopentyl)-phosphat, Tetrabrombisphenol A, Hexabrombenzol, Pentabromtoluol, 1,2-Bis(tribromphenoxy)ethan, Polybromdiphenylether, Polybromdiphenylethan, Tris(polybromphenoxy)triazin, Polybromphenylindan, Tetrabrombisphenol A-Epoxyoligomer und einem terminalem Addukt davon mit Tribromphenol, Tetrabrombisphenol A-carbonatoligomer, polybromiertem Polyethylen, Poly(polybromstyrol), bromiertem Polyphenylenoxid, Poly(pentabrombenzylacrylat) und Ethylenbistetrabromphthalimid ausgewählt ist, wobei das Verhältnis von (a):(b) im Bereich von 10:90 bis 90:10 auf Gewichtsbasis liegt.

7. Verfahren zur Herstellung feuerfester schäumbarer Styrolharzkügelchen nach Anspruch 6, wobei die bromhaltige organische Verbindung (a) mit 2,3-Dibrom-2-alkylpropylgruppen unter Bis(2,3-dibrom-2-methylpropyl)ethern von Tetrabrombisphenol A, Tetrabrombisphenol S oder Tetrabrombisphenol F, Tris(2,3-dibrom-2-methylpropyl)isocyanurat und Tris(2,3-dibrom-2-methylpropyl)cyanurat ausgewählt ist.

## Revendications

1. Perles en résine à base de styrène, expansibles, ignifugeantes, produites par un procédé de polymérisation en suspension comprenant la polymérisation d'une composition de monomère de type styrène contenant 0,5 à 5,0 parties en poids pour 100 parties en poids dudit monomère d'un retardateur d'inflammation contenant du brome, lesdites perles en résine à base de styrène comprenant un agent porogène incorporé par imprégnation avec l'agent porogène pendant ou après la polymérisation en suspension, dans lesquelles ledit retardateur d'inflammation contenant du brome comprend un mélange de (a) un composé organique contenant du brome ayant un groupe 2,3-dibromo-2-alkylpropyle et (b) un composé organique contenant du brome ayant une teneur en brome supérieure à 50 % en poids et exempt de tout atome de brome rattaché à un atome de carbone tertiaire ; le composé organique contenant du brome (b) étant choisi dans l'ensemble constitué par les éthers bis(2,3-dibromopropyliques) de tétrabromobisphénol A, tétrabromobisphénol S ou tétrabromobisphénol F, l'isocyanurate de tris(2,3-dibromopropyle), le cyanurate de tris(2,3-dibromopropyle), le phosphate de tris(tribromonéopentyle), le tétrabromobisphénol A, l'hexabromobenzène, le pentabromotoluène, le 1,2-bis(tribromophénoxy)éthane, le polybromodiphényléther, le polybromodiphényléthane, la tris(polybromophénoxy)triazine, le polybromophénylindane, un oligomère époxydé de tétrabromobisphénol A et un adduit terminal de celui-ci avec le tribromophénol, un oligomère de carbonate de tétrabromobisphénol A, le polyéthylène polybromé, le poly(polybromostyrène), le polyoxyphénylène bromé, le poly(acrylate de pentabromobenzyle) et l'éthylènebistétrabromophtalimide.

2. Perles en résine à base de styrène, expansibles, ignifugeantes, selon la revendication 1, dans lesquelles ledit composé organique contenant du brome (a) ayant un groupe 2,3-dibromo-2-alkylpropyle est choisi dans l'ensemble constitué par les éthers bis(2,3-dibromo-2-méthylpropyliques) de tétrabromobisphénol A, tétrabromo-bisphénol S ou tétrabromobisphénol F, l'isocyanurate de tris(2,3-dibromo-2-méthylpropyle), et le cyanurate de tris(2,3-dibromo-2-méthylpropyle).

3. Perles en résine à base de styrène, expansibles, ignifugeantes, selon l'une quelconque des revendications 1 et 2, dans lesquelles le rapport en poids dudit composé contenant du brome (a) ayant un groupe 2,3-dibromo-2-alkylpropyle audit composé contenant du brome (b) exempt de tout atome de brome rattaché à un atome de carbone tertiaire est de 10/90 à 90/10.

4. Perles en résine à base de styrène, expansibles, ignifugeantes, selon l'une quelconque des revendications 1 à 3, comprenant en outre moins de 1,0 partie en poids, pour 100 parties en poids dudit monomère, d'un amplificateur d'effet retardateur d'inflammation choisi dans l'ensemble constitué par un complexe métallique de phtalocyanine et un générateur de radicaux libres.

5. Article façonné produit par chauffage des perles en résine à base de styrène, expansibles, ignifugeantes, selon l'une quelconque des revendications 1 à 4, dans un moule, pour une expansion en une mousse façonnée.

6. Procédé pour produire des perles en résine à base de styrène expansibles, comprenant les étapes consistant à :
polymériser en suspension une composition de monomère comprenant un monomère de type styrène et 0,5 à 5,0 parties en poids, pour 100 parties en poids dudit monomère, d'un retardateur d'inflammation contenant du brome, et imprégner les particules de résine résultantes avec un agent porogène pendant ou après le procédé de polymérisation, ledit retardateur d'inflammation contenant du brome étant un mélange de (a) un composé organique contenant du brome ayant un groupe 2,3-dibromo-2-alkylpropyle et (b) un composé organique contenant du brome choisi dans l'ensemble constitué par les éthers bis(2,3-dibromopropyliques) de tétrabromobisphénol A, tétrabromobisphénol S ou tétrabromobisphénol F, l'isocyanurate de tris(2,3-dibromopropyle), le cyanurate de tris(2,3-dibromopropyle), le phosphate de tris(tribromonéopentyle), le tétrabromobisphénol A, l'hexabromobenzène, le pentabromotoluène, le 1,2-bis(tribromophénoxy)éthane, le polybromodiphényléther, le polybromodiphényléthane, la tris(polybromophénoxy)-triazine, le polybromophénylindane, un oligomère époxydé de tétrabromobisphénol A et un adduit terminal de celui-ci avec le tribromophénol, un oligomère de carbonate de tétrabromobisphénol A, le polyéthylène polybromé, le poly(polybromostyrène), le polyoxyphénylène bromé, le poly(acrylate de pentabromobenzyle) et l'éthylènebis-tétrabromophtalimide, le rapport en poids (a)/(b) étant de 10/90 à 90/10.

7. Procédé pour produire des perles en résine à base de styrène, expansibles, ignifugeantes, selon la revendication 6, dans lequel ledit composé organique contenant du brome (a) ayant un groupe 2,3-dibromo-2-alkylpropyle est choisi dans l'ensemble constitué par les éthers bis(2,3-dibromo-2-méthylpropyliques) de tétrabromo-bisphénol A, tétrabromobisphénol S ou tétrabromobisphénol F, l'isocyanurate de tris(2,3-dibromo-2-méthylpropyle), et le cyanurate de tris(2,3-dibromo-2-méthylpropyle).
